# EUROPEAN PATENT APPLICATION

(11) **EP 4 280 345 A1**
(43) Date of publication of application: **22.11.2023**
(21) Application number: 21920290.0
(22) Date of filing: 22.01.2021
(51) Int. Cl.: H01M 10/613, H01M 10/617, H01M 10/627

(54) **ENERGY STORAGE CONTAINER AND TEMPERATURE CONTROL METHOD**

(71) Applicant: Huawei Digital Power Technologies Co., Ltd., Shenzhen, Guangdong 518043 (CN)
(72) Inventor: WU, Zhipeng, Shenzhen, Guangdong 518129 (CN); RAN, Xiaopeng, Shenzhen, Guangdong 518129 (CN); YU, Shijiang, Shenzhen, Guangdong 518129 (CN)
(74) Representative: Huawei European IPR
(86) International application number: PCT/CN2021/073305
(87) International publication number: WO 2022/155892

(57) **Abstract**

An energy storage container and a temperature control method are disclosed. The energy storage container includes a container controller (100), a plurality of battery clusters (B1 to Bn), and a plurality of air conditioners. The plurality of air conditioners are evenly distributed in at least one of a door or a side wall of the energy storage container. Each battery cluster (B 1 to Bn) includes a plurality of battery modules connected in series. Each battery cluster (B 1 to Bn) has a corresponding air conditioner. The container controller (100) jointly controls the plurality of air conditioners to adjust internal temperature of the energy storage container. The air conditioners in the energy storage container are disposed in an evenly distributed manner rather than a conventional centralized manner. In addition, the air conditioners are disposed in a correspondence with the battery clusters, so that the battery clusters can be effectively cooled. This ensures consistency between capacities of the battery clusters as far as possible, ensures operation safety of the battery clusters, extends service life of the battery clusters, and avoids a failure or even a fire or an explosion due to excessively high temperature during charging or discharging of the battery clusters. The air conditioners are jointly controlled to adjust temperature, instead of operating independently.

## Description

### TECHNICAL FIELD

This application relates to the field of temperature adjustment and control technologies, and in particular, to an energy storage container and a temperature control method.

### BACKGROUND

Currently, photovoltaic power generation, wind power generation, and water power generation attract increasing attention. When electric energy of these renewable energy sources is applied to a power grid on a large scale, safe operation of the power grid is sometimes affected. Therefore, an energy storage system (ESS, Energy Storage System) is required for stabilizing the power grid and performing peak load regulation and frequency modulation on the power grid. In the ESS, an energy storage container may be used to accommodate batteries.

Usually, a plurality of battery clusters are placed in the energy storage container, and each battery cluster includes a plurality of battery modules connected in series. Each battery module includes a plurality of batteries. The battery clusters generate heat during charging or discharging. In addition, the energy storage container is exposed outdoors and has high temperature under sunlight. Therefore, effective heat dissipation needs to be performed for the energy storage container, to ensure safe operation of the battery clusters in the container.

### SUMMARY

This application provides an energy storage container and a temperature control method, to effectively control temperature in an energy storage container and ensure uniform temperature in the energy storage container.

An energy storage container provided in an embodiment of this application includes a container controller, a plurality of battery clusters, and a plurality of air conditioners. The plurality of air conditioners are evenly distributed in at least one of a door body or a side wall of the energy storage container. The plurality of battery clusters are sequentially arranged along a length direction of the energy storage container, and one or more rows of battery clusters may be disposed in the length direction. Air exhaust vents of the plurality of air conditioners each face a corresponding battery cluster, and each of the plurality of air conditioners is configured to dissipate heat for a corresponding battery cluster. In principle, one air conditioner dissipates heat only for one battery cluster, and does not simultaneously dissipate heat for a plurality of battery clusters. That is, a plurality of battery clusters do not jointly correspond to one air conditioner. The container controller can control the plurality of air conditioners in a unified manner, in other words, jointly control the plurality of air conditioners, to adjust internal temperature of the energy storage container.

In this embodiment of this application, to effectively control the internal temperature of the energy storage container, the plurality of air conditioners are evenly disposed in the energy storage container, so that each battery cluster has a corresponding air conditioner, and each battery cluster corresponds to a separate air conditioner. To ensure that the air conditioners effectively cool each battery cluster, the battery clusters are usually evenly disposed in the energy storage container, and the air conditioners are evenly disposed correspondingly. That is, when the air conditioners are in a one-to-one correspondence with the battery clusters, the air conditioners are also evenly disposed. This can ensure uniform temperature control for the energy storage container. The air conditioners in the energy storage container provided in this embodiment of this application are disposed in an evenly distributed manner rather than a conventional centralized manner. In addition, the air conditioners are disposed in a correspondence with the battery clusters, so that the battery clusters can be effectively cooled. This ensures operation safety of the battery clusters, and avoids a failure or even a fire or an explosion due to excessively high temperature during charging or discharging of the battery clusters.

In a possible implementation, the plurality of battery clusters are disposed in the following two rows along the length direction of the energy storage container: a first row of battery clusters and a second row of battery clusters. The first row of battery clusters corresponds to a first side wall in the length direction of the energy storage container, and the second row of battery clusters corresponds to a second side wall in the length direction of the energy storage container. The plurality of air conditioners are evenly disposed on the first side wall and the second side wall.

It should be understood that a larger quantity of air conditioners indicates better cooling effect. The foregoing descriptions are provided based on an example in which one battery cluster corresponds to one air conditioner. To achieve better cooling effect, one battery cluster may correspond to a plurality of air conditioners. For example, one battery cluster corresponds to two air conditioners, or corresponds to more air conditioners. In a possible implementation, a quantity of air conditioners is at least twice a quantity of battery clusters, and each battery cluster corresponds to at least two air conditioners. In a possible implementation, a quantity of battery clusters is the same as a quantity of air conditioners, and the battery clusters are in a one-to-one correspondence with the air conditioners.

In this embodiment of this application, a quantity of air conditioners disposed in a height direction of the energy storage container is not limited. For example, for one battery cluster, one of the plurality of air conditioners is disposed in the height direction of the energy storage container, that is, in the height direction, air conditioners are not stacked, and only one air conditioner is disposed. However, for one battery cluster, one or more, for example, two, air conditioners may be disposed in the length direction of the energy storage container.

The following describes two different air exhaust and air intake implementations when two air conditioners are stacked in the height direction.

In a first possible implementation, at least the following two air conditioners of the plurality of air conditioners are disposed from bottom to top on a single side in the height direction of the energy storage container: a first air conditioner and a second air conditioner, where the first air conditioner and the second air conditioner correspond to a same battery cluster; air exhaust vents of the first air conditioner and the second air conditioner are both configured to blow air to the corresponding battery cluster; air return vents of the first air conditioner and the second air conditioner are both configured to absorb hot air blown from the corresponding battery cluster; the first air conditioner and the second air conditioner both exhaust air from the top or the front, and return air from a lower position, where the front is a side facing the corresponding battery cluster; and an air exhaust duct for the first air conditioner is reserved in the middle of the battery cluster corresponding to the first air conditioner and the second air conditioner.

In a second possible implementation, at least the following two air conditioners of the plurality of air conditioners are disposed from bottom to top on a single side in the height direction of the energy storage container: a first air conditioner and a second air conditioner, where the first air conditioner and the second air conditioner correspond to a same battery cluster; air exhaust vents of the first air conditioner and the second air conditioner are both configured to blow air to the corresponding battery cluster; air return vents of the first air conditioner and the second air conditioner are both configured to absorb air blown from the corresponding battery cluster; and the first air conditioner exhausts air from the bottom or the front and returns air from an upper position, and the second air conditioner exhausts air from the top or the front and returns air from a lower position, where the front is a side facing the corresponding battery cluster.

In addition, when a plurality of energy storage containers form a container group, the container group may communicate with a server, and the server controls the plurality of energy storage containers in the container group. For example, in a power supply system, a plurality of energy storage containers jointly feed back electric energy to a power grid. It should be understood that, when a single energy storage container is used, the energy storage container may also be controlled by a server. In a possible implementation, the container controller is further configured to receive an air exhaust vent temperature instruction value T sent by a server, and obtain an air exhaust vent temperature reference value based on the air exhaust vent temperature instruction value T; and the server obtains the air exhaust vent temperature instruction value T based on a charge/discharge rate of a battery cluster corresponding to the container controller. The air exhaust vent temperature instruction value T delivered by the server to the energy storage container needs to be obtained based on a charge/discharge rate of a battery cluster corresponding to the energy storage container, ambient temperature, and the like.

When all the air conditioners in the energy storage container can operate normally, the air conditioners have same output capacities, to be specific, equally share a heat dissipation capability. In a possible implementation, the container controller is specifically configured to: when all the air conditioners are normal, send the air exhaust vent temperature instruction value T as the air exhaust vent temperature reference value to each of the plurality of air conditioners through a ring network based on an ID.

An embodiment of this application further provides a complementation manner used when some air conditioners fail. When an air conditioner fails, a cooling capability of a normal air conditioner needs to be increased, to share a cooling capacity. Particularly, an air conditioner close to the failed air conditioner may share a higher cooling capacity, to implement a cooling complementation function. The following describes specific complementation measures. In a possible implementation, the plurality of air conditioners are n air conditioners, and m air conditioners fail, where n is an integer greater than or equal to 2, and m is an integer less than or equal to n. The container controller specifically allocates a corresponding air exhaust vent temperature reference value δᵢ×T to n-m normal air conditioners based on the air exhaust vent temperature instruction value T, and sends, to a corresponding air conditioner through a ring network based on an ID, the air exhaust vent temperature reference value δᵢ×T allocated to the n-m normal air conditioners, where i=1, ..., n-m, δᵢ is a preset cooling coefficient of an i^{th} air conditioner, 0<δᵢ≤1, a shorter distance between the i^{th} air conditioner and the failed air conditioner indicates a smaller δᵢ, and a longer distance between the i^{th} air conditioner and the failed air conditioner indicates a larger δᵢ. When an air conditioner in the energy storage container fails, not all of other normal air conditioners need to contribute a cooling capacity. For example, a normal air conditioner far away from the failed air conditioner may remain a same working condition, and an air exhaust vent temperature reference value of the normal air conditioner does not need to be adjusted, that is, the air exhaust vent temperature reference value of the normal air conditioner may remain as T. In this case, δᵢ=1.

When an air conditioner fails, the failed air conditioner sends a failure code to the container controller, that is, has an active alarm function. For example, when a fan or a compressor of the air conditioner fails, the failure code sent by the failed air conditioner carries an ID of the failed air conditioner. Therefore, the container controller identifies the ID of the failed air conditioner after receiving the failure code. Because IDs are bound to air conditioners in a one-to-one correspondence, a location of the failed air conditioner can be learned, and an air conditioner around the failed air conditioner can be identified, so that a larger preset cooling coefficient is allocated to the air conditioner around the failed air conditioner, and a smaller preset cooling coefficient is allocated to an air conditioner far away from the failed air conditioner.

An embodiment of this application further provides a safe operation mode, to ensure continuous operation when a communication failure or a device failure occurs. In a possible implementation, each air conditioner enters a safe operation mode when the air conditioner receives no air exhaust vent temperature reference value within a preset time period. In the safe operation mode, the air conditioner operates for predetermined time based on an air exhaust vent temperature reference value received last time, or operates for the predetermined time based on a preset temperature reference value.

To better implement uniformity and controllability of temperature in the energy storage container, in this embodiment of this application, the air conditioners are not isolated individuals; instead, the n air conditioners and the container controller are connected to form at least one ring network, and communicate with each other through the ring network. Each air conditioner and the container controller each are a node in the ring network, and each node has an identity ID. The container controller communicates with each air conditioner through the ring network based on the ID. In a possible implementation, the plurality of air conditioners form at least one ring network, each of the plurality of air conditioners is a node in the ring network, and each node has an identity ID. The container controller is configured to send the air exhaust vent temperature reference value to a corresponding air conditioner through the ring network based on the ID.

In the energy storage container provided in this embodiment of this application, each air conditioner is provided with a temperature sensor. To be specific, temperature sensors are in a one-to-one correspondence with the air conditioners. When a temperature sensor of an air conditioner fails, closed-loop temperature control cannot be performed on the air conditioner based on temperature reported by the temperature sensor. However, to ensure that the air conditioner operates and does not exit the ring network, a large temperature adjustment and control capability is ensured for the energy storage container as far as possible. The air conditioner corresponding to the failed temperature sensor may obtain an operation parameter of an adjacent air conditioner through the ring network based on the ID, and operate based on the operation parameter of the adjacent air conditioner, that is, may operate synchronously with the adjacent air conditioner. The operation parameter may include a fan rotational speed, a compressor rotational speed, and the like. To be specific, an air conditioner in the energy storage container provided in this embodiment of this application may send an operation parameter of the air conditioner to the ring network for sharing by another air conditioner, and the ring network transfers an operation parameter of each air conditioner. The energy storage container provides a function of sharing operation parameters of the air conditioners. It should be understood that, when a temperature sensor of an air conditioner is normal, closed-loop control may be performed on the air conditioner, to be specific, operation of a compressor and a fan is controlled, based on temperature measured by the temperature sensor and the air exhaust vent temperature reference value T delivered by the container controller. When a temperature sensor of an air conditioner fails, closed-loop control cannot be performed, and only open-loop control can be performed based on an operation parameter of an adjacent air conditioner.

In a possible implementation, the energy storage container further includes a plurality of temperature sensors. The temperature sensors are in a one-to-one correspondence with the air conditioners, and the temperature sensors are disposed on corresponding air conditioners. When a temperature sensor of a j^{th} air conditioner fails, the j^{th} air conditioner obtains an operation parameter of an adjacent air conditioner through the ring network based on the ID, and continues to operate based on the operation parameter, where j=1, ..., n, and the operation parameter includes at least one of the following: a fan rotational speed of the air conditioner or a compressor rotational speed of the air conditioner.

In a possible implementation, a communication mode of the ring network is any one of the following: RS485, a controller area network CAN, Wi-Fi, fast Ethernet FE, or a Konnex protocol.

In a possible implementation, a fan is disposed in each battery cluster, and the fan is configured to flow hot air out of the battery cluster.

In a possible implementation, the energy storage container is a non-walk-in container, and the air conditioners are embedded in doors, on two sides of the non-walk-in container, that are able to be opened.

In a possible implementation, the plurality of air conditioners are further configured to adjust internal humidity of the energy storage container.

Based on the energy storage container provided in the foregoing embodiments, advantages of the embodiments of the energy storage container are applicable to method embodiments, and details are not described herein again. An embodiment of this application further provides a temperature control method for an energy storage container. The energy storage container includes a plurality of battery clusters and a plurality of air conditioners. Each battery cluster has a corresponding air conditioner. The plurality of air conditioners are jointly controlled to adjust internal temperature of the energy storage container.

In a possible implementation, the plurality of air conditioners form at least one ring network, each of the plurality of air conditioners is a node in the ring network, and each node has an identity ID. The controlling the plurality of air conditioners to adjust internal temperature of the energy storage container specifically includes: sending an air exhaust vent temperature reference value to a corresponding air conditioner through the ring network based on the ID of the node.

In a possible implementation, the plurality of air conditioners are n air conditioners, and m air conditioners fail, where n is an integer greater than or equal to 2, and m is an integer less than or equal to n. The sending an air exhaust vent temperature reference value to a corresponding air conditioner through the ring network based on the ID of the node specifically includes: allocating a corresponding air exhaust vent temperature reference value δᵢ×T to n-m normal air conditioners based on the air exhaust vent temperature instruction value T, and sending, to a corresponding air conditioner through the ring network based on the ID, the air exhaust vent temperature reference value δᵢ×T allocated to the n-m normal air conditioners, where i=1, ..., n-m, δᵢ is a preset cooling coefficient of an i^{th} air conditioner, 0<δᵢ≤1, a shorter distance between the i^{th} air conditioner and the failed air conditioner indicates a smaller δᵢ, and a longer distance between the i^{th} air conditioner and the failed air conditioner indicates a larger δᵢ.

It can be learned from the foregoing technical solutions that embodiments of this application have the following advantages:

The container controller, the plurality of air conditioners, and the plurality of battery clusters are disposed in the energy storage container provided in embodiments of this application. In addition, each battery cluster has a corresponding air conditioner. For example, one battery cluster corresponds to one air conditioner, or one battery cluster may correspond to a plurality of air conditioners. This can ensure effective cooling for each battery cluster. Usually, the battery clusters are evenly disposed in the energy storage container. When the air conditioners are in a one-to-one correspondence with the battery clusters, the air conditioners are also evenly disposed, to be specific, are evenly disposed in the energy storage container in a distributed manner. This can ensure uniform temperature control for the energy storage container. In addition, the air conditioners in the energy storage container do not operate independently, but are controlled by the container controller. The container controller jointly controls the plurality of air conditioners to operate in a coordinated manner, so that temperature control can be performed more efficiently and comprehensively. The air conditioners in the energy storage container provided in embodiments of this application are disposed in an evenly distributed manner rather than a conventional centralized manner. In addition, the air conditioners are disposed in a correspondence with the battery clusters, so that the battery clusters can be effectively cooled. This ensures consistency between capacities of the battery clusters as far as possible, ensures operation safety of the battery clusters, extends service life of the battery clusters, and avoids a failure or even a fire or an explosion due to excessively high temperature during charging or discharging of the battery clusters.

### BRIEF DESCRIPTION OF DRAWINGS

FIG. 1A is a schematic diagram of application of an energy storage container according to an embodiment of this application;
FIG. 1B is a schematic diagram of a connection between another energy storage container and a power grid according to an embodiment of this application;
FIG. 2 is a schematic diagram of an energy storage container according to an embodiment of this application;
FIG. 3A is a side view of an energy storage container according to an embodiment of this application;
FIG. 3B is a top view corresponding to FIG. 3A according to an embodiment of this application;
FIG. 4 is a schematic diagram of another energy storage container according to an embodiment of this application;
FIG. 5A is a schematic diagram of a battery cluster according to an embodiment of this application;
FIG. 5B is a schematic diagram of another battery cluster according to an embodiment of this application;
FIG. 5C is a schematic diagram of still another battery cluster according to an embodiment of this application;
FIG. 6 is a schematic diagram of an air conditioner layout according to an embodiment of this application;
FIG. 7 is a schematic diagram of another air conditioner layout according to an embodiment of this application;
FIG. 8 is a schematic diagram of still another air conditioner layout according to an embodiment of this application;
FIG. 9 is a schematic diagram of a ring network of an energy storage container according to an embodiment of this application;
FIG. 10 is a schematic diagram of a communication link failure of a ring network of an energy storage container according to an embodiment of this application;
FIG. 11 is a schematic diagram of a single-node failure of a ring network of an energy storage container according to an embodiment of this application; and
FIG. 12 is a flowchart of a temperature control method for an energy storage container according to an embodiment of this application.

### DESCRIPTION OF EMBODIMENTS

In the following descriptions, terms such as "first" and "second" are merely intended for a purpose of description, and shall not be understood as an indication or implication of relative importance or an implicit indication of a quantity of indicated technical features. Therefore, a feature limited by "first", "second", or the like may explicitly or implicitly include one or more features. In descriptions of this application, unless otherwise stated, "a plurality of" means two or more than two.

In addition, in this application, orientation terms such as "up" and "down" may include but are not limited to being defined relative to placement orientations of components shown in the accompanying drawings. It should be understood that these directional terms may be relative concepts and are used for relative description and clarification, and may vary correspondingly based on changes of the placement orientations of the components in the accompanying drawings.

In this application, unless otherwise specified and limited, the term "connection" should be understood in a broad sense. For example, the "connection" may be a fixed connection, a detachable connection, an integration, a direct connection, or an indirect connection through an intermediate medium. In addition, a term "coupling" may be a manner of implementing an electrical connection for signal transmission. The "coupling" may be a direct electrical connection, or may be an indirect electrical connection through an intermediate medium.

Embodiments of this application relate to an energy storage container. To enable persons skilled in the art to better understand technical solutions provided in embodiments of this application, the following first describes the energy storage container. As the name implies, the energy storage container is configured to accommodate energy storage batteries. Usually, a plurality of battery clusters are included in the energy storage container. The battery cluster further includes a plurality of battery modules (ESM, Energy Storage Module) connected in series. Battery modules in a battery cluster are usually arranged in a centralized manner. For example, a battery cluster includes one or more columns of battery modules. This is not specifically limited in embodiments of this application.

A specific application scenario of the energy storage container is not limited in embodiments of this application. For example, the energy storage container may be used in a photovoltaic power generation system, and a direct current output by a photovoltaic array in the photovoltaic power generation system may charge the battery clusters in the energy storage container. That is, the photovoltaic power generation system has an energy storage function, and may also be referred to as a photovoltaic storage system. In addition, the energy storage container may also be used in an energy storage station, for example, in the microgrid field. In addition, the energy storage container may also be used in a scenario in which a renewable energy source generates power, for example, water power generation or wind power generation.

The following describes an application scenario of the energy storage container with reference to accompanying drawings.

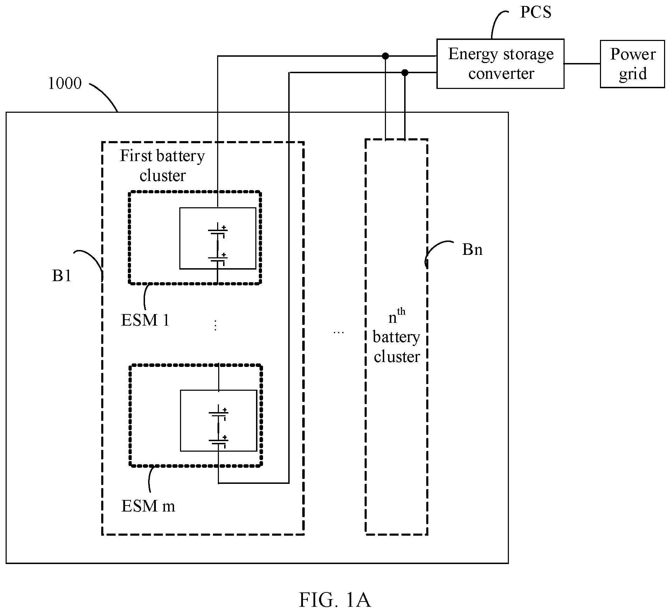

FIG. 1A is a schematic diagram of application of an energy storage container according to an embodiment of this application.

The energy storage container 1000 provided in this embodiment includes n battery clusters, for example, a first battery cluster B1 to an n^{th} battery cluster Bn. For example, each battery cluster includes m battery modules. As shown in FIG. 1A, the first battery cluster B1 includes a battery module ESM 1 to a battery module ESM m. The battery module ESM 1 to the battery module ESM m are connected in series. Each battery cluster is connected to an input end of an energy storage converter (PCS, Power Conversion System), and an output end of the PCS is connected to a power grid.

The battery cluster outputs a direct current. Therefore, if the power grid is an alternating-current power grid, the PCS needs to convert the direct current into an alternating current and provide the alternating current for the power grid.

The following describes a connection between the energy storage container and the power grid with reference to accompanying drawings.

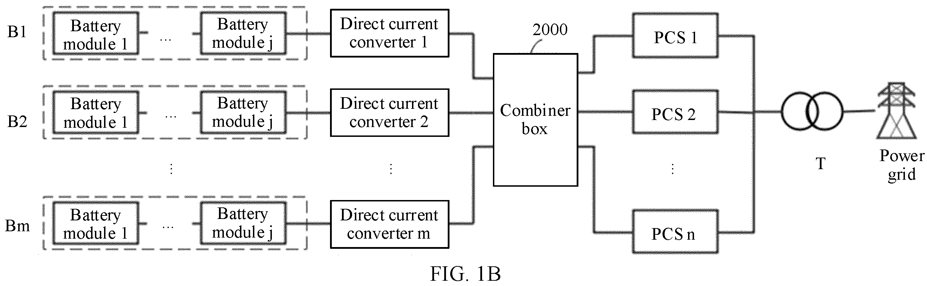

FIG. 1B is a schematic diagram of a connection between another energy storage container and a power grid according to an embodiment of this application.

An output end of each battery cluster is connected to a corresponding direct current converter. For example, a first battery cluster B1 is connected to a direct current converter 1, a second battery cluster B1 is connected to a direct current converter 2, and an m^{th} battery cluster Bm is connected to a direct current converter m. Each battery cluster includes j battery modules: a battery module 1 to a battery module j. Power of direct current converters may be different. Because power of the direct current converter may be different from that of an energy storage converter, a combiner box 2000 needs to perform adaptation. A busbar is disposed in the combiner box 2000. Because power of a single battery cluster is limited, output ends of a plurality of energy storage converters are usually connected in parallel to an input end of a transformer T, and the PCSs perform power conversion. For example, values of power obtained through conversion by a PCS 1 to a PCS n may be the same. The output ends of the plurality of PCSs are connected in parallel to the input end of the transformer T, so that power can be increased. The transformer T is configured to transform an input voltage and feed back a transformed voltage to the power grid.

The battery clusters in the energy storage container may be charged and discharged, and the battery clusters generate heat during charging and discharging. In addition, batteries in the battery clusters are made of chemical materials and are flammable and explosive at high temperature. Therefore, temperature control for the energy storage container is crucial. This is a difference from a common container.

In conventional temperature control for an energy storage container, an air conditioner is disposed in the container in a centralized manner. For example, one or two air conditioners are disposed on a door of the energy storage container. Because the energy storage container includes many battery clusters, the battery clusters cannot be effectively cooled if only one or two air conditioners are disposed in the energy storage container in a centralized manner. In addition, because the energy storage container has a large size, there are many battery clusters in the energy storage container, and air ducts are complex, uniformity and controllability of temperature in the energy storage container cannot be ensured. For example, usually, temperature around a battery cluster close to an air exhaust vent of the air conditioner is lower, and temperature around a battery cluster far away from the air exhaust vent of the air conditioner is higher. Because energy storage batteries are sensitive to temperature, capacity attenuation of the energy storage batteries varies at different temperature. With an increase of operation time, battery uniformity is degraded. If temperature in the energy storage container is nonuniform, attenuation of electrochemical cells is discrete. To be specific, some batteries have longer service life, and some batteries have shorter service life. As a result, the battery cluster is subject to clear bucket effect. This affects an overall capacity of an energy storage system.

A type of the energy storage container is not limited in embodiments of this application. Currently, the energy storage container mainly includes a walk-in energy storage container and a non-walk-in energy storage container. The walk-in energy storage container means that an aisle is reserved in the energy storage container, and maintenance personnel can maintain, replace, or perform other operations on the battery clusters in the aisle. In addition, the energy storage container may alternatively be a non-walk-in energy storage container. To be specific, no aisle is provided in the energy storage container, but side doors, that is, a first side door and a second side door, that are able to be opened are reserved on two sides. The first side door and the second side door are disposed opposite to each other, and the side doors may be opened for maintenance of the battery clusters. Because no aisle is reserved in the non-walk-in container, space utilization is higher, more battery clusters may be placed, and the battery clusters can be evenly distributed in the energy storage container.

In embodiments of this application, an example in which the energy storage container needs to be cooled is used for description. It should be understood that the energy storage container may need to be heated to ensure normal operation in a cold region. Examples are not exhaustively described herein. Air conditioners provided in embodiments of this application can implement both cooling and heating. For example, the air conditioners can absorb hot air generated during heating of the battery to form a heat dissipation cycle, so as to increase temperature in the energy storage container. In addition, the air conditioners may further adjust humidity in the energy storage container, for example, dehumidify the container.

In embodiments of this application, to effectively control internal temperature of the energy storage container, a plurality of air conditioners are evenly disposed in the energy storage container, so that each battery cluster has a corresponding air conditioner, and the air conditioners can uniformly cool each battery cluster. This ensures uniform temperature in the energy storage container. Each air conditioner is an integrated air conditioner. The following describes specific implementations in detail with reference to accompanying drawings.

### Energy Storage Container Embodiment 1

For example, when the energy storage container is a non-walk-in energy storage container, the energy storage container is usually in a rectangular shape. For the non-walk-in energy storage container, door bodies disposed on two sides in a length direction of the cuboid are usually able to be opened. A plurality of air conditioners provided in this embodiment of this application may be evenly embedded in side doors, on the two sides, that are able to be opened. When the energy storage container is a walk-in container, a walk-in door is usually disposed in a width direction of the energy storage container, that is, on a side of a short edge. A plurality of air conditioners provided in this embodiment of this application may be directly mounted to side walls on two sides of a long side of the energy storage container, and holes are directly provided on the side walls on the two sides of the length direction for fastening the air conditioners.

This embodiment of this application includes a container controller, a plurality of battery clusters, and a plurality of air conditioners.

The plurality of air conditioners are evenly distributed in at least one of a door or a side wall of the energy storage container, and each battery cluster includes a plurality of battery modules connected in series.

The plurality of battery clusters are sequentially arranged along a length direction of the energy storage container. Air exhaust vents of the plurality of air conditioners each face a corresponding battery cluster, and each of the plurality of air conditioners is configured to dissipate heat for a corresponding battery cluster.

To be specific, in principle, one air conditioner dissipates heat only for one battery cluster, and does not simultaneously dissipate heat for a plurality of battery clusters. That is, a plurality of battery clusters do not jointly correspond to one air conditioner. Each battery cluster corresponds to a separate air conditioner.

The container controller is configured to jointly control the plurality of air conditioners to adjust internal temperature of the energy storage container.

An implementation form of the energy storage controller is not specifically limited in this embodiment of this application. For example, the energy storage controller may be a single-chip microcomputer, a microprocessor, or a programmable logic controller.

In this embodiment of this application, a form of the battery modules included in the battery cluster is not limited. For example, the battery cluster may include one or more columns of battery modules.

The following describes in detail the energy storage container provided in this embodiment of this application with reference to accompanying drawings.

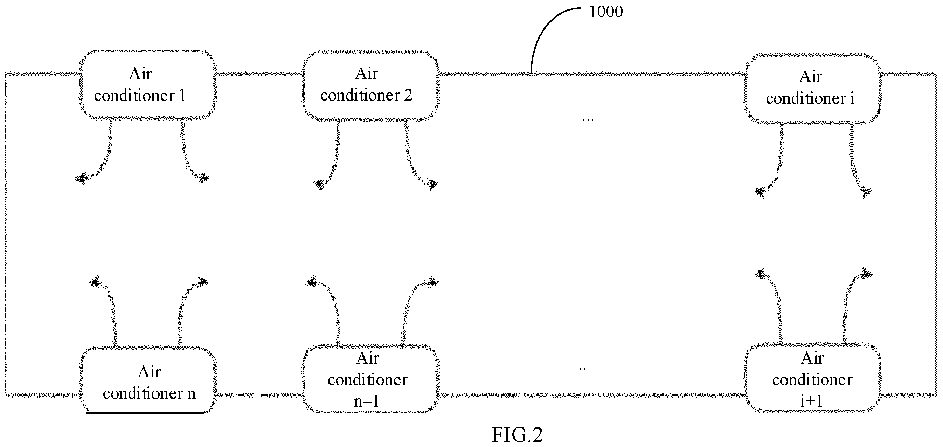

FIG. 2 is a schematic diagram of a first embodiment of an energy storage container according to an embodiment of this application.

In this embodiment, an example in which the energy storage container 1000 includes n air conditioners is used for description. As shown in FIG. 1, the n air conditioners are an air conditioner i, an air conditioner 2, ..., an air conditioner i, an air conditioner i+1, ..., an air conditioner n-1, and an air conditioner n, where n is an integer greater than i, and i is an integer greater than 1 and less than n. If quantities of air conditioners disposed on two side doors are the same, n may be twice of i. It should be understood that FIG. 1 is merely an example, and an example in which the quantities of air conditioners embedded in the two side doors are the same and positions of the air conditioners are symmetrical is used for description.

It should be understood that, whether the quantities of air conditioners embedded in the two side doors are the same depends on whether battery clusters disposed relative to the two side doors in the energy storage container are completely symmetrical. For example, when a larger quantity of battery clusters are disposed on one side of the two sides and a smaller quantity of battery clusters are disposed on the other side, the quantities of air conditioners embedded in the doors on the two sides may be different, provided that positions of the air conditioners correspond to positions of the battery clusters.

A non-walk-in energy storage container is used as an example. Air conditioners are directly embedded into side doors, on two sides, that are able to be opened. For example, i air conditioners may be embedded into a first side door, and i air conditioners may be embedded into a second side door.

To help persons skilled in the art better understand a correspondence between an air conditioner and a battery cluster, the following provides descriptions with reference to accompanying drawings.

A specific correspondence between a battery cluster and an air conditioner is not limited in this embodiment of this application, provided that it is ensured that each battery cluster has a corresponding air conditioner. For example, two battery clusters jointly correspond to one air conditioner. Alternatively, to achieve better temperature control effect, each battery cluster may have at least one corresponding air conditioner, that is, a quantity of air conditioners is greater than or equal to a quantity of battery clusters. To implement more uniform temperature control, the following describes two specific implementations as examples.

In a first manner, a quantity of air conditioners is at least twice a quantity of battery clusters.

That is, the quantity of air conditioners is greater than the quantity of air conditioners. For example, the quantity of air conditioners is at least twice the quantity of battery clusters, and each battery cluster corresponds to at least two air conditioners.

With reference to accompanying drawings, the following describes an implementation in which the quantity of air conditioners is twice the quantity of battery clusters.

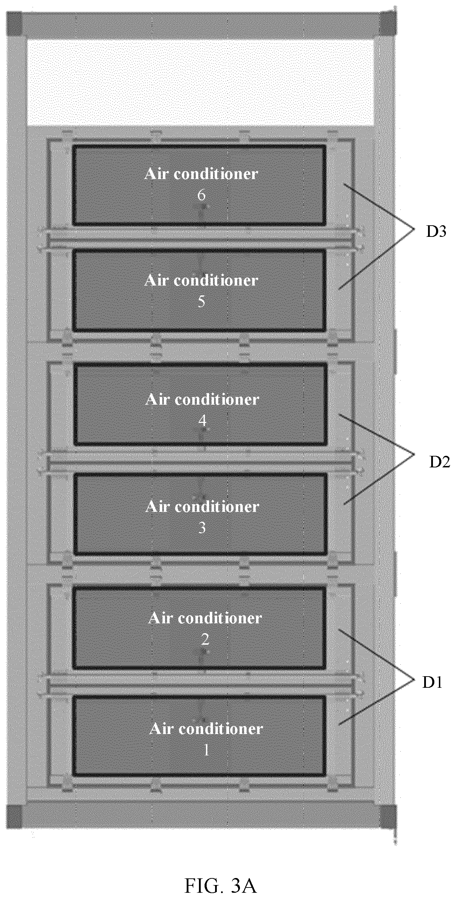

FIG. 3A is a side view of an energy storage container according to an embodiment of this application.

In this embodiment, three groups of doors are disposed on a side wall on one side of a length direction of the energy storage container: a first group of doors D1, a second group of doors D2, and a third group of doors D3. Each group of doors includes two door bodies, and one air conditioner is disposed on each door body. To be specific, an air conditioner 1 and an air conditioner 2 are disposed on the first group of doors D1, an air conditioner 3 and an air conditioner 4 are disposed on the second group of doors D2, and an air conditioner 5 and an air conditioner 6 are disposed on the third group of doors D3. To implement uniform heat dissipation, each air conditioner may be disposed in the middle in a height direction of a door body.

Because FIG. 3A is a side view, three groups of doors are further symmetrically disposed on an opposite side of the side shown in FIG. 3A, and each group of doors includes two doors. Similarly, six air conditioners are also disposed on the opposite side. That is, a total of 12 air conditioners are disposed in the energy storage container provided in this embodiment.

A plurality of battery clusters may be disposed in at least the following two rows along the length direction of the energy storage container: a first row of battery clusters and a second row of battery clusters. The first row of battery clusters corresponds to a first side wall in the length direction of the energy storage container, and the second row of battery clusters corresponds to a second side wall in the length direction of the energy storage container. A plurality of air conditioners are evenly disposed on the first side wall and the second side wall.

It can be learned from FIG. 3A that, in the energy storage container provided in this embodiment of this application, for one battery cluster, one of the plurality of air conditioners is disposed in a height direction of the energy storage container, that is, only one air conditioner is disposed in the height direction.

Alternatively, in the height direction, a plurality of air conditioners may be disposed for one battery cluster. For example, a plurality of air conditioners are stacked in the height direction. This is not specifically limited in this embodiment of this application.

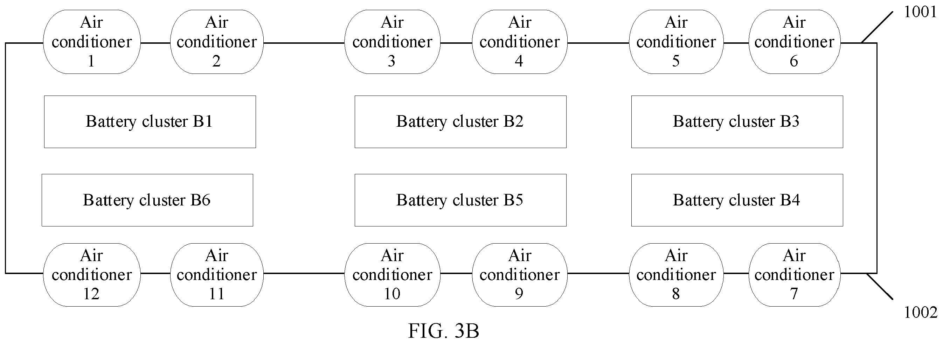

The following describes a layout relationship between a battery cluster and an air conditioner with reference to a top view shown in FIG. 3B.

FIG. 3B is a top view corresponding to FIG. 3A.

For example, six battery clusters, that is, a battery cluster B1 to a battery cluster B6, are disposed in the energy storage container, and a quantity of air conditioners is twice a quantity of battery clusters. Each battery cluster corresponds to two air conditioners, and two air conditioners jointly cool one battery cluster. For example, an air conditioner 1 and an air conditioner 2 jointly dissipate heat for the battery cluster B1, an air conditioner 3 and an air conditioner 4 jointly dissipate heat for the battery cluster B2, an air conditioner 5 and an air conditioner 6 jointly dissipate heat for the battery cluster B3, an air conditioner 7 and an air conditioner 8 jointly dissipate heat for the battery cluster B4, an air conditioner 9 and an air conditioner 10 jointly dissipate heat for the battery cluster B5, and an air conditioner 11 and an air conditioner 12 jointly dissipate heat for the battery cluster B6. Battery clusters shown in FIG. 3B are disposed in two rows along the length direction of the container. A first row of battery clusters includes the battery cluster B1 to the battery cluster B3 from left to right, and a second row of battery clusters includes the battery cluster B4 to the battery cluster B6 from right to left. The first row of battery clusters corresponds to a first side wall 1001 in the length direction of the energy storage container, and the second row of battery clusters corresponds to a second side wall 1002 in the length direction of the energy storage container.

In FIG. 3A and FIG. 3B, an example in which each battery cluster corresponds to two air conditioners is used for description. It should be understood that each battery cluster may correspond to more air conditioners. For example, one battery cluster corresponds to three air conditioners or four air conditioners. That is, a quantity of air conditioners is three or four times a quantity of battery clusters.

In addition, in FIG. 3A and FIG. 3B, one battery cluster is disposed in the height direction of the energy storage container. For example, the air conditioner 1 and the air conditioner 2 correspond only to one battery cluster B 1 in the height direction.

In a second manner, a quantity of air conditioners is equal to a quantity of battery clusters.

The quantity of battery clusters may be the same as the quantity of air conditioners, and the battery clusters are in a one-to-one correspondence with the air conditioners. That is, one air conditioner corresponds to one battery cluster. For example, if the energy storage container includes six battery clusters, six air conditioners are also included, and one air conditioner cools one battery cluster. For example, an air exhaust vent of an air conditioner may be disposed to face a battery cluster, and low-temperature air from the air conditioner is directly blown to the battery cluster.

The second manner is used below as an example for description. To be specific, the quantity of battery clusters is the same as the quantity of air conditioners.

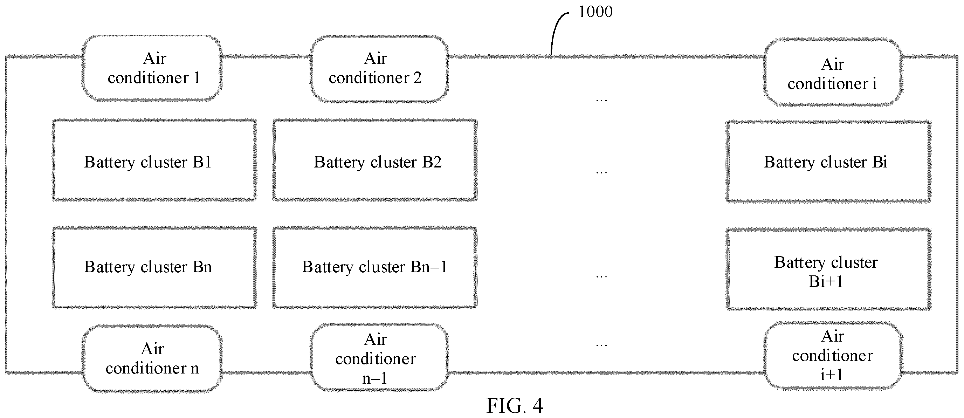

FIG. 4 is a schematic diagram of another energy storage container according to an embodiment of this application.

It can be learned from FIG. 4 that each battery cluster corresponds to one air conditioner, and the energy storage container includes a total of n battery clusters in total. An example in which n is twice i is used for description. To be specific, the n battery clusters are disposed in two rows, and each row includes i battery clusters. To ensure that each battery cluster has a corresponding air conditioner, each side door of the energy storage container includes i air conditioners, and a total of n air conditioners are included.

To be specific, an air conditioner 1 corresponds to a battery cluster B 1, an air conditioner 1 corresponds to a battery cluster B2, an air conditioner i corresponds to a battery cluster Bi, an air conditioner i+1 corresponds to a battery cluster Bi+1, an air conditioner n-1 corresponds to a battery cluster Bn-1, and an air conditioner n corresponds to a battery cluster n.

It can be learned from FIG. 4 that a plurality of air conditioners are disposed in the energy storage container provided in this embodiment of this application, and each battery cluster has a corresponding air conditioner. This can ensure effective cooling for each battery cluster. The battery clusters are usually evenly disposed in the energy storage container. When the air conditioners are in a one-to-one correspondence with the battery clusters, the air conditioners are also evenly disposed. This can ensure uniform temperature control for the energy storage container. The air conditioners in the energy storage container provided in this embodiment of this application are disposed in an evenly distributed manner rather than a conventional centralized manner. In addition, the air conditioners are disposed in a correspondence with the battery clusters, so that the battery clusters can be effectively cooled. This ensures operation safety of the battery clusters, and avoids a failure or even a fire or an explosion due to excessively high temperature during charging or discharging of the battery clusters.

It should be understood that a larger quantity of air conditioners indicates better cooling effect. The foregoing descriptions are provided based on an example in which one battery cluster corresponds to one air conditioner. To achieve better cooling effect, one battery cluster may correspond to a plurality of air conditioners. For example, one battery cluster corresponds to two air conditioners, or corresponds to more air conditioners. This is not specifically limited in this embodiment of this application.

To better understand the energy storage container provided in this embodiment of this application, the following briefly describes composition of a battery cluster in the energy storage container with reference to accompanying drawings.

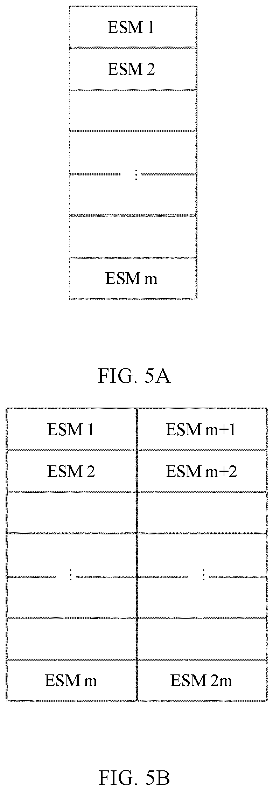

FIG. 5A is a schematic diagram of a battery cluster according to an embodiment of this application.

The battery cluster may be disposed based on a voltage of the entire battery cluster, a size of an ESM, and a size of the container. The battery cluster shown in FIG. 5A includes a single column of ESMs, to be specific, includes m ESMs connected in series: an ESM 1 to an ESM m, where m is an integer greater than 1.

FIG. 5B is a schematic diagram of another battery cluster according to an embodiment of this application.

The battery cluster shown in FIG. 5B includes two columns of ESMs. To be specific, a first column includes m ESMs: an ESM 1 to an ESM m; and a second column includes m ESMs: an ESM m+1 to an ESM 2m.

In this embodiment of this application, only an example in which the columns each include a same quantity of ESMs is used for description, and the two columns of the battery cluster may alternatively include different quantities of ESMs.

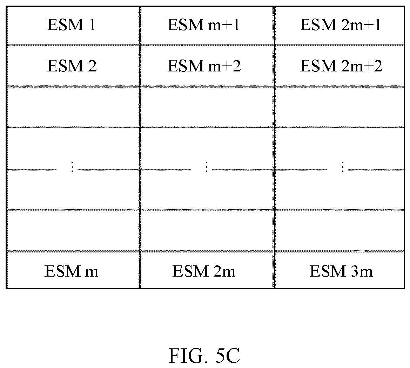

FIG. 5C is a schematic diagram of still another battery cluster according to an embodiment of this application.

The battery cluster shown in FIG. 5C includes three columns of ESMs. To be specific, a first column includes m ESMs: an ESM 1 to an ESM m; a second column includes m ESMs: an ESM m+1 to an ESM 2m; and a third column includes m ESMs: an ESM 2m+1 to an ESM 3m.

It should be understood that FIG. 5A to FIG. 5C are merely examples for description, and each battery cluster may alternatively include more columns of ESMs. Examples are not described one by one herein.

A battery module may be equipped with a fan for heat dissipation, for example, for drawing air, blowing air, or drawing and blowing air. It should be understood that the battery module may alternatively not be equipped with a fan, and cold air from an air conditioner is supplied to the ESM of the battery cluster through an air return fan of the air conditioner or an external induced draft fan.

With reference to accompanying drawings, the following describes a specific layout in which a plurality of air conditioners are evenly disposed in the energy storage container provided in this embodiment of this application.

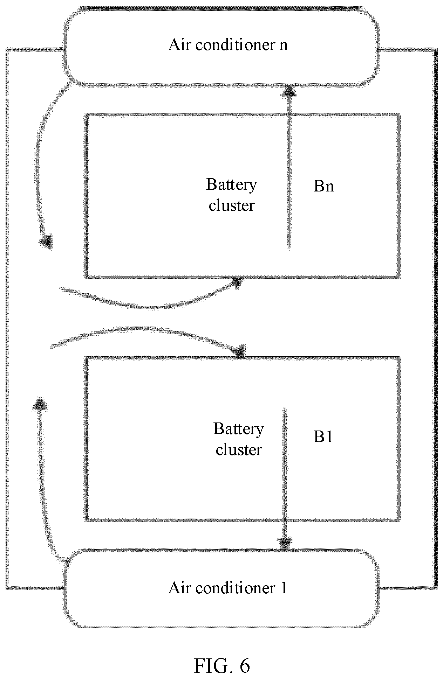

FIG. 6 is a schematic diagram of an air conditioner layout according to an embodiment of this application.

FIG. 6 is a cross-sectional side view of the energy storage container. It can be learned that the container includes two rows of battery clusters, and a battery cluster B1 and a battery cluster Bn are used as examples for description. FIG. 6 may be considered as a cross-sectional view corresponding to FIG. 4. To be specific, one battery cluster corresponds to one air conditioner, and battery clusters are in a one-to-one correspondence with air conditioners.

In this embodiment, an example in which one battery cluster corresponds to one air conditioner is used for description, and the air conditioners are disposed on side doors, on two sides of a height direction of the energy storage container, that are able to be opened. To be specific, the air conditioners are disposed on side doors that are disposed face to face on two sides of a long edge of the energy storage container. A single air conditioner is arranged in a height direction on each side of the energy storage container. In a length direction of the energy storage container, an air conditioner may be disposed based on an actual case. For example, one, two, or more air conditioners may be arranged for each battery cluster.

An air conditioner 1 corresponds to the battery cluster B1, and an air conditioner n corresponds to the battery cluster Bn.

The air conditioner 1 and the air conditioner n both exhaust air from the top or the front, where the front is a side facing the battery cluster. For example, the front of the air conditioner 1 is a side, facing the battery cluster B1, of the air conditioner 1; and similarly, the front of the air conditioner n is a side, facing the battery cluster Bn, of the air conditioner n. The air conditioner 1 and the air conditioner n may be disposed to return air from the middle. A specific air path is indicated by arrows in the figure. An example in which the air conditioner exhausts air from the top and returns air from the middle is used. When each air conditioner exhausts air from the top, during specific implementation, a diversion apparatus may be disposed for each air conditioner, and cold air from an air exhaust vent of the air conditioner is diverted to the top of the battery cluster through the diversion apparatus. To be specific, cold air flowing out of an air exhaust vent of the air conditioner 1 is diverted to the top of the battery cluster B 1 through a corresponding diversion apparatus, cold air flowing out of an air exhaust vent of the air conditioner Bn is diverted to the top of the battery cluster Bn through a corresponding diversion apparatus, and then the cold air is blown from the top of the battery cluster to a natural air duct between the battery cluster B 1 and the battery cluster Bn. Because a fan is disposed in each battery cluster, the cold air enters the battery cluster through the natural air duct to dissipate heat for a battery module. Specifically, there is an air duct in the battery module, and air can be returned through the air duct in the battery module and a fan disposed in the battery module.

The air conditioner layout shown in FIG. 6 is simple. Only one air conditioner is disposed in the height direction, and an air exhaust direction and an air return direction are disposed in a classic manner. Therefore, a structural requirement for the battery cluster is also simple, and good heat dissipation effect can be achieved.

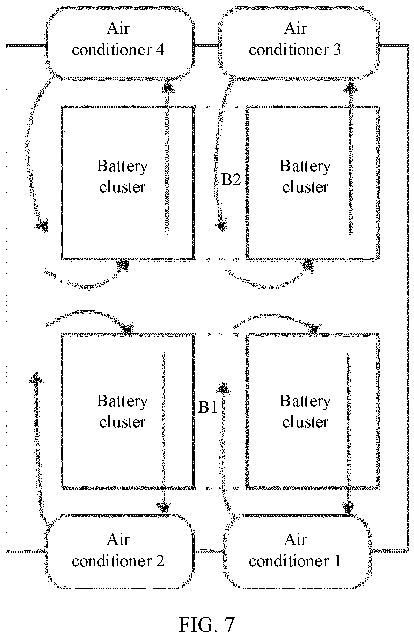

With reference to FIG. 7, the following describes a case in which at least two air conditioners are disposed in the height direction.

FIG. 7 is a schematic diagram of another air conditioner layout according to an embodiment of this application.

As shown in FIG. 7, at least two air conditioners are disposed in the height direction of the energy storage container in a stacked manner, and air exhaust positions and air return positions of the two air conditioners are the same.

At least two of the plurality of air conditioners are disposed from bottom to top on a single side of the height direction of the energy storage container: a first integrated air conditioner and a second integrated air conditioner. Two air conditioners corresponding to a battery cluster B 1 are a first integrated air conditioner 1 and a second integrated air conditioner 2. Two air conditioners corresponding to a battery cluster B2 on the other side are a third integrated air conditioner 3 and a fourth integrated air conditioner 4. It should be noted that FIG. 7 shows two battery clusters, but an air duct is provided in the middle of each of B1 and B2. To be specific, each battery cluster is divided into an upper part and a lower part, and one battery cluster corresponds to two air conditioners in the height direction.

An example in which the battery cluster B1 corresponds to two air conditioners is used below for description.

Air exhaust vents of the first integrated air conditioner 1 and the second integrated air conditioner 2 are both configured to blow air to a corresponding battery cluster.

Air return vents of the first integrated air conditioner 1 and the second integrated air conditioner 2 are both configured to absorb hot air blown from the corresponding battery cluster.

The first integrated air conditioner 1 and the second integrated air conditioner 2 both exhaust air from the top or the front (in FIG. 7, an example in which air is exhausted from the top is used for description), and return air from lower positions. It should be understood that an air return position is usually at a lower position. In this embodiment, the front is a side, facing a corresponding battery cluster, of the air conditioner.

The first integrated air conditioner 1 needs to exhaust air from the top. Therefore, an air exhaust duct for the first integrated air conditioner 1 needs to be reserved in the middle of the battery cluster B1 corresponding to the first integrated air conditioner 1 and the second integrated air conditioner 2. To be specific, a part indicated by dashed lines in the figure divides the battery cluster B1 into an upper part and a lower part, so that the first integrated air conditioner 1 can exhaust air from the top.

Similarly, the third integrated air conditioner 3 on the other side needs to exhaust air from the top. Therefore, an air exhaust duct for the third integrated air conditioner 3 also needs to be reserved in the middle of the battery cluster B2.

In the air conditioner layout shown in FIG. 7, the air conditioners are of a same type, to be specific, have a same air exhaust direction and a same air return direction. Therefore, mounting and disposing of the air conditioners are simple. However, an air exhaust duct needs to be disposed in the middle of a battery cluster, and one battery cluster needs to be divided into an upper part and a lower part.

It should be noted that only one battery cluster is disposed in the height direction of the energy storage container provided in this embodiment of this application, but one or more air conditioners may be disposed for one battery cluster in the height direction. This is not limited in this embodiment of this application.

With reference to accompanying drawings, the following describes an air conditioner layout case in which one battery cluster corresponds to two air conditioners in the height direction, but the battery cluster does not need to be divided into two parts.

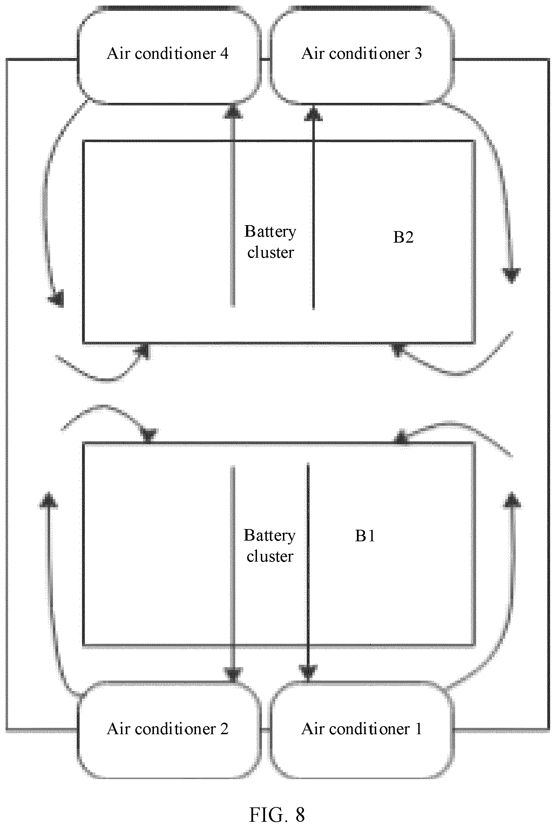

FIG. 8 is a schematic diagram of still another air conditioner layout according to an embodiment of this application.

At least two of the plurality of air conditioners are disposed from bottom to top on a single side of the height direction of the energy storage container: a first integrated air conditioner and a second integrated air conditioner.

Air exhaust vents of the first integrated air conditioner 1 and the second integrated air conditioner 2 are both configured to blow air to a corresponding battery cluster.

Air return vents of the first integrated air conditioner 1 and the second integrated air conditioner 2 are both configured to absorb air blown from the corresponding battery cluster.

It should be understood that when the air conditioner is used for cooling, the air return vent of the air conditioner absorbs hot air blown from the battery cluster.

The first integrated air conditioner 1 exhausts air from the bottom or the front (FIG. 8 shows an example in which air is exhausted from the bottom), and returns air from an upper position. An air return direction is at upper position. The second integrated air conditioner 2 exhausts air from the top or the front (FIG. 8 shows an example in which air is exhausted from the top), and returns air from a lower position. The front is a side facing the corresponding battery cluster.

The second integrated air conditioner 2 located in an upper part exhausts air from the top, and the first integrated air conditioner 1 located in a lower part exhausts air from the bottom. Therefore, no air exhaust duct needs to be provided for the air conditioners in the middle of a battery cluster B1. Similarly, on the other side, an air conditioner 3 located in a lower part exhausts air from the bottom, and an air conditioner 4 located in an upper part exhausts air from the top. Therefore, a battery cluster B2 is also disposed as a whole, and no air exhaust duct needs to be provided at a middle position.

In the energy storage container provided in this embodiment of this application, at least two air conditioners are disposed in the height direction of the energy storage container, and air exhaust positions of two air conditioners stacked in the height direction are different. An upper air conditioner exhausts air from the top, and a lower air conditioner exhausts air from the bottom Therefore, a battery cluster can be disposed a whole. This facilitates disposing of the battery cluster.

In the air conditioner and battery cluster layout shown in FIG. 8, air exhaust ducts for air conditioners are reserved at both the top and the bottom of a battery cluster, and air exhaust ducts for air conditioners are also reserved at the top and the bottom of the energy storage container.

An example in which a battery cluster corresponds to two air conditioners in the height direction is used above for example. Alternatively, a battery cluster may correspond to more air conditioners in the height direction.

To better implement uniformity and controllability of temperature in the energy storage container, in this embodiment of this application, the air conditioners are not isolated individuals; instead, the n air conditioners and the container controller are connected to form at least one ring network, and communicate with each other through the ring network. Each air conditioner and the container controller each are a node in the ring network, and each node has an identity ID. The container controller communicates with each air conditioner through the ring network based on the ID.

For example, the container controller is configured to send an air exhaust vent temperature reference value for an air conditioner to a corresponding air conditioner through a ring network based on a node ID. The air exhaust vent temperature reference value may be preset by the container controller, or may be further obtained by the container controller based on an air exhaust vent temperature instruction value T received from a server. For example, the container controller may communicate with the server, and receive the air exhaust vent temperature instruction value T from the server; and the server obtains the air exhaust vent temperature instruction value T for an air conditioner based on a charge/discharge rate of a battery cluster corresponding to the container controller. A manner of communication between the container controller and the server is not limited in this embodiment of this application, and may be wired communication or wireless communication. It can be understood that one server may correspond to a plurality of energy storage containers, and charge/discharge rates of battery clusters in different energy storage containers may be the same or different. The air exhaust vent temperature instruction value T delivered by the server to the energy storage container needs to be obtained based on a charge/discharge rate of a battery cluster corresponding to the energy storage container, ambient temperature, and the like.

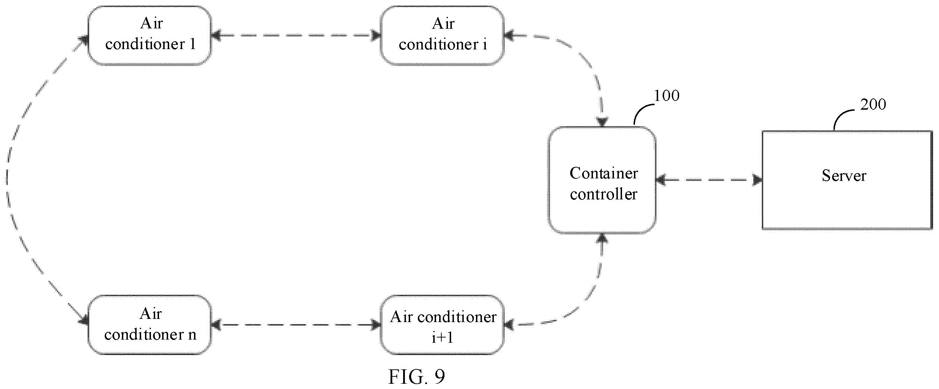

FIG. 9 is a schematic diagram of a ring network of an energy storage container according to an embodiment of this application.

For example, it can be learned from FIG. 2 and FIG. 9 that, based on actual physical locations of the air conditioners shown in FIG. 2, adjacent air conditioners are adjacent nodes in the ring network. For example, a container controller 100 is disposed between the air conditioner i and the air conditioner i+1, and nodes may bidirectionally communicate with each other. The container controller 100 may communicate with a server 200. It should be understood that the server 200 may control a plurality of container controllers, that is, correspond an energy storage container group, and may control temperature in the plurality of energy storage containers to be the same, or may respectively send different air exhaust vent temperature instruction values for air conditioners to container controllers of different energy storage containers. This is not specifically limited in this embodiment of this application.

Actual physical locations of battery clusters are fixed and known, and air conditioners are in a one-to-one correspondence with the battery clusters. Therefore, actual physical locations of the air conditioners are also fixed and known. Therefore, each air conditioner may learn of its relative position through the ring network based on an ID.

In this embodiment of this application, a communication mode of the ring network may be any one of the following:
RS485, a controller area network (CAN, Controller Area Network), Wi-Fi, fast Ethernet (FE, Fast Ethernet), or a Konnex protocol.

Air conditioners communicate with each other through the ring network. Therefore, when a node or a communication link between two adjacent nodes fails, communication can be normally performed, without affecting normal operation.

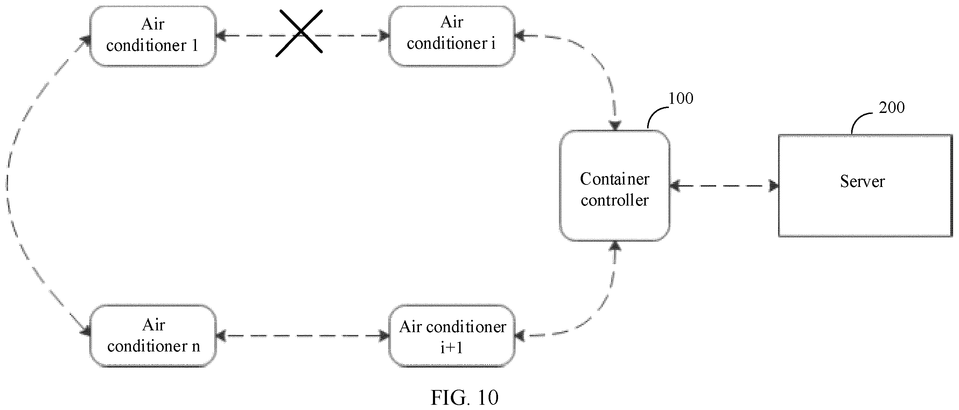

For example, a communication link between two adjacent air conditioners among air conditioners of an air conditioner 1 to an air conditioner i shown in FIG. 10 fails. Before the failure occurs, the container controller 100 may send an air exhaust vent temperature reference value for an air conditioner to the air conditioner 1 through the air conditioner i. After the failure occurs, the container controller 100 may send an air exhaust vent temperature reference value for an air conditioner to the air conditioner 1 through an air conditioner i+1 and an air conditioner n. Therefore, in this embodiment of this application, when air conditioners form a ring network, a failure of a communication link between two adjacent air conditioners does not affect communication between the container controller 100 and the air conditioners.

FIG. 10 shows a communication link failure. The following describes a failure of a single air conditioner with reference to accompanying drawings.

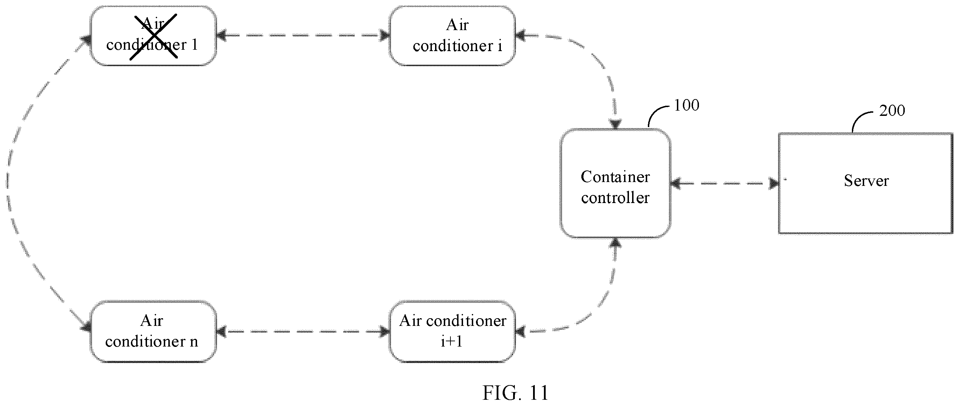

For example, a failure of an air conditioner shown in FIG. 11 is described by using a failure of an air conditioner 1 as an example. The container controller 100 may communicate with an air conditioner i in a counterclockwise direction, and communicate with an air conditioner i+1 and an air conditioner n in a clockwise direction. It can be learned that a failure of a node in a ring network does not affect communication between the container controller 100 and a normal air conditioner, and therefore does not affect normal operation of the normal air conditioner.

When all air conditioners in the energy storage container are normal, the container controller 100 directly uses the air exhaust vent temperature instruction value T as an air exhaust vent temperature reference value, and sends the air exhaust vent temperature reference value to each of the plurality of air conditioners through the ring network based on an ID. In this case, temperature at air exhaust vents of all the air conditioners is the same, and all the air conditioners have same output capacities.

The following describes a case in which air conditioners are jointly controlled when an air conditioner in the energy storage container fails, to ensure that temperature in the energy storage container remains unchanged. When an air conditioner fails, a cooling capability of a normal air conditioner needs to be increased, to share a cooling capacity. Particularly, an air conditioner close to the failed air conditioner may share a higher cooling capacity, to implement a cooling complementation function. The following describes specific complementation measures.

The plurality of air conditioners are n air conditioners, and m air conditioners fail, where n is an integer greater than or equal to 2, and m is an integer less than or equal to n.

When the m air conditioners fail, the remaining n-m air conditioners are normal. The container controller 100 allocates a corresponding air exhaust vent temperature reference value δᵢ×T to the n-m normal air conditioners based on the air exhaust vent temperature instruction value T; and sends, to a corresponding air conditioner, namely, the n-m normal air conditioners, through a ring network based on an ID, the air exhaust vent temperature reference value δᵢ×T allocated to the n-m normal air conditioners, where n is a total quantity of air conditioners disposed in the energy storage container, m is a total quantity of failed air conditioners, i=1, ..., n-m, δᵢ is a preset cooling coefficient of an i^{th} air conditioner, 0<δᵢ≤1, a shorter distance between the i^{th} air conditioner and the failed air conditioner indicates a smaller δᵢ, and a longer distance between the i^{th} air conditioner and the failed air conditioner indicates a larger δᵢ. It should be noted that, δᵢ may alternatively be equal to 1. To be specific, when an air conditioner in the energy storage container fails, not all of other normal air conditioners need to contribute a cooling capacity. For example, a normal air conditioner far away from the failed air conditioner may remain a same working condition, and an air exhaust vent temperature reference value of the normal air conditioner does not need to be adjusted, that is, the air exhaust vent temperature reference value of the normal air conditioner may remain as T. In this case, δᵢ=1.

It should be understood that, when an air conditioner fails, the failed air conditioner sends a failure code to the container controller 100, that is, has an active alarm function. For example, when a fan or a compressor of the air conditioner fails, the failure code sent by the failed air conditioner carries an ID of the failed air conditioner. Therefore, the container controller 100 identifies the ID of the failed air conditioner after receiving the failure code. Because IDs are bound to air conditioners in a one-to-one correspondence, a location of the failed air conditioner can be learned, and an air conditioner around the failed air conditioner can be identified, so that a larger preset cooling coefficient is allocated to the air conditioner around the failed air conditioner, and a smaller preset cooling coefficient is allocated to an air conditioner far away from the failed air conditioner.

FIG. 3 is still used as an example. For example, if the air conditioner 2 fails, the air conditioner 1 located on the left of the air conditioner 2 and the air conditioner 3 (not shown in the figure) located on the right of the air conditioner 2 are adjacent air conditioners. In this case, the air conditioner 1 and the air conditioner 3 may have same output capacities and each share a high cooling capacity. To be specific, air exhaust vent temperature reference values for the air conditioner 1 and the air conditioner 3 are set to be less than those of other air conditioners, for example, an air conditioner i and an air conditioner i+1. In this way, the air conditioner 1 and the air conditioner 3 supplement a cooling capacity of the failed air conditioner 2, to continue to ensure that temperature in the energy storage container meets a requirement.

To compensate for a failed air conditioner and supplement temperature adjustment and control when some air conditioners fail, the container controller in the energy storage container provided in this embodiment of this application controls all air conditioners as an organic whole, and jointly controls all air conditioners for temperature adjustment, and the air conditioners do not operate independently without direct association. This is also different from a conventional air conditioner layout. In a conventional manner, charging and discharging of a battery cluster stop when an air conditioner fails. This affects operation efficiency of an energy storage system. However, in the energy storage container provided in this embodiment of this application, when some air conditioners fail, operation of battery clusters is not affected, all battery clusters can continue to operate normally, and a normal air conditioner ensures safety and controllability of temperature in the energy storage container.

Air ducts between battery clusters provided in this embodiment of this application are not isolated. Especially, face-to-face battery clusters can share temperature control effect of air conditioners.

The foregoing describes how the container controller jointly controls distributed air conditioners when an air conditioner fails, to compensate for the failed air conditioner. The following describes a safe operation mode used when the air conditioners are normal but communication fails or the container controller is abnormal. The communication failure may be caused by a communication error between the container controller and the server, or may be caused by a communication error between the container controller and the air conditioner. In this embodiment of this application, each air conditioner is provided with a safe operation mode function.

For example, each air conditioner enters a safe operation mode when the air conditioner receives no air exhaust vent temperature reference value within a preset time period. In the safe operation mode, the air conditioner operates for predetermined time based on an air exhaust vent temperature reference value received last time, or operates for the predetermined time based on a preset temperature reference value.

For example, the preset time period is two hours. If the air conditioner does not receive, within two hours, an air exhaust vent temperature reference value delivered by the container controller, communication or the container controller has failed. In this case, the air conditioner may continue to operate for X hours based on the preset safe operation mode, where X is preset time, and may be a decimal or may be an integer. This is not specifically limited in this embodiment of this application. In the safe operation mode, the air conditioner may operate for predetermined time based on a preset temperature reference value. For example, the preset temperature reference value is 25 degrees centigrade (°C). In addition, because external ambient temperature does not change abruptly, in the safe operation mode, the air conditioner may alternatively continue to operate based on an air exhaust vent temperature reference value received last time. If communication is not recovered or no manual operation is performed after the air conditioner operates for X hours, the air conditioner may be shut down, that is, stop operating.

The foregoing describes only an example of the safe operation mode, and the safe operation mode may alternatively be set to another type of safe operation mode, to prevent an air conditioner from operating for a long time in a communication failure state. This ensures safety of the air conditioner.

In a possible implementation, each air conditioner in the energy storage container provided in this embodiment of this application may monitor another air conditioner in the ring network. During communication, frame loss, signal interference, an instruction error, or the like may occur. Therefore, to still ensure reliable operation in the foregoing cases, each air conditioner in the ring network may monitor an operating status of another air conditioner, to perform mutual check and ensure that air conditioners in the ring network operate in a same working condition. This avoids a case that some air conditioners operate in a cooling mode and some air conditioners operate in a heating mode, and therefore avoids control disorder.

For example, a difference between air exhaust vent temperature reference values for air conditioners cannot be greater than or equal to a preset value. For example, the preset value may be 5 degrees centigrade (°C). If air exhaust vent temperature reference values for some air conditioners are 25°C and air exhaust vent temperature reference values for some air conditioners are 30°C, it indicates that some air conditioners are abnormal. To check a correct air exhaust vent temperature reference value, air exhaust vent temperature reference values for other air conditioners may be checked in the ring network, and incorrect air exhaust vent temperature reference values are modified according to a majority rule. In this way, all air conditioners in the ring network operate based on the correct air exhaust vent temperature reference value.

In addition, in the energy storage container provided in this embodiment of this application, each air conditioner is provided with a temperature sensor. To be specific, temperature sensors are in a one-to-one correspondence with the air conditioners. When a temperature sensor of an air conditioner fails, closed-loop temperature control cannot be performed on the air conditioner based on temperature reported by the temperature sensor. However, to ensure that the air conditioner operates and does not exit the ring network, a large temperature adjustment and control capability is ensured for the energy storage container as far as possible. The air conditioner corresponding to the failed temperature sensor may obtain an operation parameter of an adjacent air conditioner through the ring network based on the ID, and operate based on the operation parameter of the adjacent air conditioner, that is, may operate synchronously with the adjacent air conditioner. The operation parameter may include a fan rotational speed, a compressor rotational speed, and the like. To be specific, an air conditioner in the energy storage container provided in this embodiment of this application may send an operation parameter of the air conditioner to the ring network for sharing by another air conditioner, and the ring network transfers an operation parameter of each air conditioner. The energy storage container provides a function of sharing operation parameters of the air conditioners. It should be understood that, when a temperature sensor of an air conditioner is normal, closed-loop control may be performed on the air conditioner, to be specific, operation of a compressor and a fan is controlled, based on temperature measured by the temperature sensor and the air exhaust vent temperature reference value T delivered by the container controller. When a temperature sensor of an air conditioner fails, closed-loop control cannot be performed, and only open-loop control can be performed based on an operation parameter of an adjacent air conditioner.

In a possible implementation, in the energy storage container provided in this embodiment of this application, the air conditioners not only can cool the battery clusters to ensure uniformity and controllability of temperature in the energy storage container, but also can control humidity in the energy storage container to implement uniformity and controllability of humidity in the energy storage container.

### Method Embodiment

Based on the energy storage container provided in the foregoing embodiment, an embodiment of this application further provides a temperature control method for an energy storage container. The following provides detailed descriptions with reference to accompanying drawings.

For a structure of the energy storage container, refer to the descriptions in the foregoing energy storage container embodiment. Details are not described herein again.

An embodiment of this application provides a temperature control method for an energy storage container, where the energy storage container includes a plurality of battery clusters and a plurality of air conditioners, and each battery cluster has a corresponding air conditioner.

The method includes:
jointly controlling the plurality of air conditioners to adjust internal temperature of the energy storage container.

In the temperature control method provided in this embodiment of this application, air conditioners do not operate independently; instead, a plurality of air conditioners can be controlled to operate in a coordinated manner, so that temperature control can be performed more efficiently and comprehensively. In this way, the battery clusters can be effectively cooled. This ensures consistency between capacities of the battery clusters as far as possible, ensures operation safety of the battery clusters, extends service life of the battery clusters, and avoids a failure or even a fire or an explosion due to excessively high temperature during charging or discharging of the battery clusters.

To better implement uniformity and controllability of temperature in the energy storage container, in this embodiment of this application, the air conditioners are not isolated individuals; instead, the n air conditioners and the container controller are connected to form at least one ring network, and communicate with each other through the ring network. Each air conditioner and the container controller each are a node in the ring network, and each node has an identity ID. The container controller communicates with each air conditioner through the ring network based on the ID.

The energy storage container may include a container controller, and the container controller jointly controls temperature of the air conditioners. The following provides detailed descriptions with reference to accompanying drawings.

For example, the container controller is configured to send an air exhaust vent temperature reference value for an air conditioner to a corresponding air conditioner through the ring network based on the node ID. The air exhaust vent temperature reference value may be preset by the container controller, or may be received by the container controller from a server. For example, the container controller communicates with the server, and receives an air exhaust vent temperature instruction value from the server; and the server obtains the air exhaust vent temperature instruction value T for an air conditioner based on a charge/discharge rate of a battery cluster corresponding to the container controller.

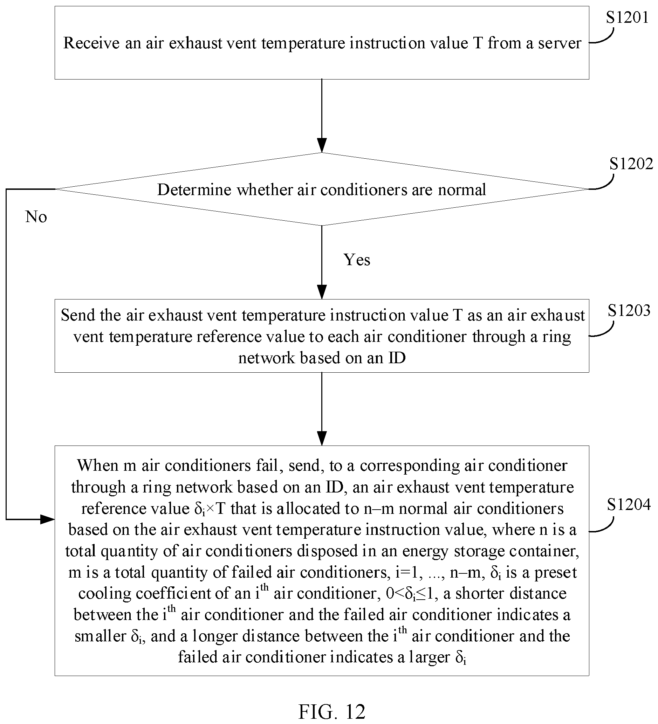

FIG. 12 is a flowchart of a temperature control method for an energy storage container according to an embodiment of this application.

S1201: Receive an air exhaust vent temperature instruction value T from a server.

The server may obtain the air exhaust vent temperature instruction value T based on a charge/discharge rate of a battery cluster corresponding to a container controller.

A manner of communication between the container controller and the server is not limited in this embodiment of this application, and may be wired communication or wireless communication.

S1202: Determine whether air conditioners are normal. If the air conditioners are normal, S1203 is performed. If m air conditioners fail, S1204 is performed.

S1203: Send the air exhaust vent temperature instruction value T as an air exhaust vent temperature reference value to each air conditioner through a ring network based on an ID.

If all air conditioners are normal, working conditions of the air conditioners may be the same. To be specific, the air conditioners operate based on a same air exhaust vent temperature reference value.

S1204: When the m air conditioners fail, allocate a corresponding air exhaust vent temperature reference value δᵢ×T to n-m normal air conditioners based on the air exhaust vent temperature instruction value T, and send, to a corresponding air conditioner through a ring network based on an ID, the air exhaust vent temperature reference value δᵢ×T allocated to the n-m normal air conditioners, where n is a total quantity of air conditioners disposed in the energy storage container, m is a total quantity of failed air conditioners, i=1, ..., n-m, δᵢ is a preset cooling coefficient of an i^{th} air conditioner, 0<δᵢ≤1, a shorter distance between the i^{th} air conditioner and the failed air conditioner indicates a smaller δᵢ, and a longer distance between the i^{th} air conditioner and the failed air conditioner indicates a larger δᵢ.

When the m air conditioners fail, a cooling capability of a normal air conditioner may be improved to compensate for the failed air conditioner, so as to ensure that temperature in the energy storage container meets a requirement. The following rule is applied: A shorter distance from the failed air conditioner indicates a higher output capacity.

In the temperature control method for an energy storage container in this embodiment of this application, all air conditioners are jointly controlled, and the air conditioners are not separately controlled. When some air conditioners fail, cooling capabilities of the air conditioners can be maximally utilized, and the air conditioners coordinate with and supplement each other to improve a temperature control capability of the entire energy storage container. Because the temperature in the energy storage container can be effectively controlled, normal operation of all battery clusters can be ensured, and a charge/discharge capacity is not affected, so that a power supply capability of the energy storage container is improved.

The foregoing describes how the container controller jointly controls distributed air conditioners when an air conditioner fails, to compensate for the failed air conditioner. The following describes a safe operation mode used when the air conditioners are normal but communication fails or the container controller is abnormal. The communication failure may be caused by a communication error between the container controller and the server, or may be caused by a communication error between the container controller and the air conditioner. In this embodiment of this application, each air conditioner is provided with a safe operation mode function.

For example, each air conditioner enters a safe operation mode when the air conditioner receives no air exhaust vent temperature reference value within a preset time period. In the safe operation mode, the air conditioner operates for predetermined time based on an air exhaust vent temperature reference value received last time, or operates for the predetermined time based on a preset temperature reference value.

For example, the preset time period is two hours. If the air conditioner does not receive, within two hours, an air exhaust vent temperature reference value delivered by the container controller, communication or the container controller has failed. In this case, the air conditioner may continue to operate for X hours based on the preset safe operation mode, where X is preset time, and may be a decimal or may be an integer. This is not specifically limited in this embodiment of this application. In the safe operation mode, the air conditioner may operate for predetermined time based on a preset temperature reference value. For example, the preset temperature reference value is 25 degrees centigrade (°C). In addition, because external ambient temperature does not change abruptly, in the safe operation mode, the air conditioner may alternatively continue to operate based on an air exhaust vent temperature reference value received last time. If communication is not recovered or no manual operation is performed after the air conditioner operates for X hours, the air conditioner may be shut down, that is, stop operating.

It should be understood that, in this application, "at least one (item)" means one or more, and "a plurality of" means two or more. The term "and/or" describes an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "At least one of the following items" or a similar expression thereof indicates any combination of the items, including any combination of one or more of the items. For example, at least one of a, b, or c may indicate a, b, c, a and b, a and c, b and c, or a, b, and c, where a, b, and c may be singular or plural.

The foregoing embodiments are merely intended for describing the technical solutions of this application rather than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. An energy storage container, comprising a container controller, a plurality of battery clusters, and a plurality of air conditioners, wherein
the plurality of air conditioners are evenly distributed in at least one of a door body or a side wall of the energy storage container;
the plurality of battery clusters are sequentially arranged along a length direction of the energy storage container, air exhaust vents of the plurality of air conditioners each face a corresponding battery cluster, and each of the plurality of air conditioners is configured to dissipate heat for a corresponding battery cluster; and
the container controller is configured to jointly control the plurality of air conditioners to adjust internal temperature of the energy storage container.

2. The energy storage container according to claim 1, wherein the plurality of battery clusters are disposed in the following two rows along the length direction of the energy storage container: a first row of battery clusters and a second row of battery clusters;
the first row of battery clusters corresponds to a first side wall in the length direction of the energy storage container, and the second row of battery clusters corresponds to a second side wall in the length direction of the energy storage container; and
the plurality of air conditioners are evenly disposed on the first side wall and the second side wall.

3. The energy storage container according to claim 1 or 2, wherein a quantity of air conditioners is at least twice a quantity of battery clusters, and each battery cluster corresponds to at least two air conditioners.

4. The energy storage container according to claim 1 or 2, wherein a quantity of battery clusters is the same as a quantity of air conditioners, and the battery clusters are in a one-to-one correspondence with the air conditioners.

5. The energy storage container according to claim 3 or 4, wherein for one battery cluster, one of the plurality of air conditioners is disposed in a height direction of the energy storage container.

6. The energy storage container according to any one of claims 1 to 4, wherein at least the following two air conditioners of the plurality of air conditioners are disposed from bottom to top on a single side in the height direction of the energy storage container: a first air conditioner and a second air conditioner, wherein the first air conditioner and the second air conditioner correspond to a same battery cluster;
air exhaust vents of the first air conditioner and the second air conditioner are both configured to blow air to the corresponding battery cluster;
air return vents of the first air conditioner and the second air conditioner are both configured to absorb hot air blown from the corresponding battery cluster;
the first air conditioner and the second air conditioner both exhaust air from the top or the front, and return air from a lower position, wherein the front is a side facing the corresponding battery cluster; and
an air exhaust duct for the first air conditioner is reserved in the middle of the battery cluster corresponding to the first air conditioner and the second air conditioner.

7. The energy storage container according to any one of claims 1 to 4, wherein at least the following two air conditioners of the plurality of air conditioners are disposed from bottom to top on a single side in the height direction of the energy storage container: a first air conditioner and a second air conditioner, wherein the first air conditioner and the second air conditioner correspond to a same battery cluster;
air exhaust vents of the first air conditioner and the second air conditioner are both configured to blow air to the corresponding battery cluster;
air return vents of the first air conditioner and the second air conditioner are both configured to absorb air blown from the corresponding battery cluster; and
the first air conditioner exhausts air from the bottom or the front and returns air from an upper position, and the second air conditioner exhausts air from the top or the front and returns air from a lower position, wherein the front is a side facing the corresponding battery cluster.

8. The energy storage container according to any one of claims 1 to 7, wherein the container controller is further configured to receive an air exhaust vent temperature instruction value T sent by a server, and obtain an air exhaust vent temperature reference value based on the air exhaust vent temperature instruction value T; and the server obtains the air exhaust vent temperature instruction value T based on a charge/discharge rate of a battery cluster corresponding to the container controller.

9. The energy storage container according to claim 8, wherein the container controller is specifically configured to: when all the air conditioners are normal, send the air exhaust vent temperature instruction value T as the air exhaust vent temperature reference value to each of the plurality of air conditioners through a ring network based on an identity document ID.

10. The energy storage container according to claim 8, wherein the plurality of air conditioners are n air conditioners, m air conditioners fail, n is an integer greater than or equal to 2, and m is an integer less than or equal to n; and
the container controller specifically allocates a corresponding air exhaust vent temperature reference value δᵢ×T to n-m normal air conditioners based on the air exhaust vent temperature instruction value T, and sends, to a corresponding air conditioner through a ring network based on the ID, the air exhaust vent temperature reference value δᵢ×T allocated to the n-m normal air conditioners, wherein i=1, ..., n-m, δᵢ is a preset cooling coefficient of an i^{th} air conditioner, 0<δᵢ≤1, a shorter distance between the i^{th} air conditioner and the failed air conditioner indicates a smaller δᵢ, and a longer distance between the i^{th} air conditioner and the failed air conditioner indicates a larger δᵢ.

11. The energy storage container according to any one of claims 8 to 10, wherein each air conditioner enters a safe operation mode when the air conditioner receives no air exhaust vent temperature reference value within a preset time period, wherein in the safe operation mode, the air conditioner operates for predetermined time based on an air exhaust vent temperature reference value received last time, or operates for the predetermined time based on a preset temperature reference value.

12. The energy storage container according to any one of claims 8 to 11, wherein the plurality of air conditioners form at least one ring network, each of the plurality of air conditioners is a node in the ring network, and each node has the ID; and
the container controller is configured to send the air exhaust vent temperature reference value to a corresponding air conditioner through the ring network based on the ID.

13. The energy storage container according to any one of claims 1 to 12, further comprising a plurality of temperature sensors, wherein
the temperature sensors are in a one-to-one correspondence with the air conditioners, and the temperature sensors are disposed on corresponding air conditioners; and
when a temperature sensor of a j^{th} air conditioner fails, the j^{th} air conditioner obtains an operation parameter of an adjacent air conditioner through the ring network based on the ID, and continues to operate based on the operation parameter, wherein j=1, ..., n, and the operation parameter comprises at least one of the following: a fan rotational speed of the air conditioner or a compressor rotational speed of the air conditioner.

14. The energy storage container according to claim 12 or 13, wherein a communication mode of the ring network is any one of the following:
RS485, a controller area network CAN, Wi-Fi, fast Ethernet FE, or a Konnex protocol.

15. The energy storage container according to any one of claims 1 to 14, wherein a fan is disposed in each battery cluster, and the fan is configured to flow hot air out of the battery cluster.

16. The energy storage container according to any one of claims 1 to 15, wherein the energy storage container is a non-walk-in container, and the air conditioners are embedded in doors, on two sides of the non-walk-in container, that are able to be opened.

17. The energy storage container according to any one of claims 1 to 16, wherein the plurality of air conditioners are further configured to adjust internal humidity of the energy storage container.

18. A temperature control method for an energy storage container, wherein the energy storage container comprises a plurality of battery clusters and a plurality of air conditioners, and each battery cluster has a corresponding air conditioner; and
the plurality of air conditioners are jointly controlled to adjust internal temperature of the energy storage container.

19. The method according to claim 18, wherein the plurality of air conditioners form at least one ring network, each of the plurality of air conditioners is a node in the ring network, and each node has an identity ID; and
the controlling the plurality of air conditioners to adjust internal temperature of the energy storage container specifically comprises:
sending an air exhaust vent temperature reference value to a corresponding air conditioner through the ring network based on the ID of the node.

20. The method according to claim 19, wherein the plurality of air conditioners are n air conditioners, m air conditioners fail, n is an integer greater than or equal to 2, and m is an integer less than or equal to n; and
the sending an air exhaust vent temperature reference value to a corresponding air conditioner through the ring network based on the ID of the node specifically comprises:
allocating a corresponding air exhaust vent temperature reference value δᵢ×T to n-m normal air conditioners based on the air exhaust vent temperature instruction value T, and sending, to a corresponding air conditioner through the ring network based on the ID, the air exhaust vent temperature reference value δᵢ×T allocated to the n-m normal air conditioners, wherein i=1, ..., n-m, δᵢ is a preset cooling coefficient of an i^{th} air conditioner, 0<δᵢ≤1, a shorter distance between the i^{th} air conditioner and the failed air conditioner indicates a smaller δᵢ, and a longer distance between the i^{th} air conditioner and the failed air conditioner indicates a larger δᵢ.
